# FASCICULE DE BREVET EUROPEEN

(11) **EP 3 472 245 B1**
(45) Date de publication et mention de la délivrance du brevet: **08.05.2024**
(21) Numéro de dépôt: 17815770.7
(22) Date de dépôt: 02.08.2017
(51) Int. Cl.: C08L 101/00, C08G 83/00

(54) **NOUVELLES MACROMOLÉCULES GÉANTES: LES COPOLY-DENDRIMÈRES CONTENANT DES HÉTÉROATOMES**
NEUE RIESIGE MAKROMOLEKÜLE:COPOLYDENDRIMERE MIT HETEROATOMEN
NEW GIANT MACROMOLECULES: COPOLYDENDRIMERS CONTAINING HETEROATOMS

(30) Priorité: 21.06.2016 MA 39136
(43) Date de publication de la demande: 24.04.2019
(73) Titulaire: Universite Euromediterraneenne De Fes, Fès 30000 (MA)
(72) Inventeur: BOUSMINA, Mosto, Fès 30000 (MA); KATIR, Nadia, Fès 30000 (MA); EL KADIB, Abdelkrim, Fès 30000 (MA); EL BRAHMI, Nabil, Fès 30000 (MA); MAJORAL, Jean-Pierre, 31077 Toulouse (FR); MARCOTTE, Nathalie, F-34295 Cedex (FR)
(74) Mandataire: Cabinet Camus Lebkiri
(86) Numéro de dépôt international: PCT/MA2017/000017
(87) Numéro de publication internationale: WO 2017/222358

(56) Documents cités:
- EP-A1- 0 893 482
- WO-A2-01/87348
- BEHESHTEH KHODADADI CHEGENI ET AL: "pH-sensitive supramolecular copolydendrimers, new anticancer drug delivery system", COLLOID & POLYMER SCIENCE, vol. 292, no. 12, 19 septembre 2014 (2014-09-19), pages 3337-3346, XP055455607, DE ISSN: 0303-402X, DOI: 10.1007/s00396-014-3398-2
- CAMINADE A M ET AL: "Phosphorus dendrimers as viewed by <31>P NMR spectroscopy; synthesis and characterization", COMPTES RENDUS - CHIMIE, ELSEVIER, PARIS, FR, vol. 13, no. 8-9, 1 août 2010 (2010-08-01) , pages 1006-1027, XP027286959, ISSN: 1631-0748 [extrait le 2010-08-01]

## Description

### Domaine de l'invention :

La présente invention décrit une nouvelle classe de macromolécules géantes appelées ici : copolydendrimères. L'invention consiste en l'association d'au moins deux entités dendritiques renfermant des hétéroatomes et leur fusion par co-condensation polymérique pour former un réseau ramifié tridimensionnel. Cette nouvelle catégorie de copolymères tridimensionnels offre un potentiel inédit dans la technologie des polymères en raison de sa particularité : forme globulaire, complexité moléculaire, porosité, sphéricité, stabilité, ect...ce qui en fait un matériau de choix dans de nombreuses applications dans le domaine des matériaux macro-, nano- et poly-structurés.

### Etat de la technique :

La synthèse et l'ingénierie manufacturière des polymères est l'un des domaines les plus attrayant tant au niveau académique qu'à l'échelle industrielle et génère une activité économique importante. Les applications quasi-illimitées des polymères nécessitent de disposer constamment d'une large bibliothèque de macromolécules à différentes variantes et d'en évaluer les propriétés. La mise au point de nouvelles architectures macromoléculaires élargit la gamme des propriétés et ouvre de nouvelles niches d'applications des polymères. Parmi les macromolécules les plus attrayantes, les objets réticulés occupent une place de choix incontournable dans ce domaine et trouvent des applications variées incluant par exemple, la chromatographie, le stockage et la séparation des gaz, la filtration et la nanofiltration, la détection, l'automobile et l'aéronautique, les biomatériaux, les revêtements ainsi que les matériaux composites et nancocomposites. Spécifiquement, les polymères appelés *« covalent organic framework* » sont préparés par co-condensation de petits monomères solubles possédant plusieurs fonctions polymérisables, ce qui permet leur croissance dans les trois dimensions. Ces matériaux polymères sont utilisés pour le piégeage du CO₂, la catalyse, la séparation des gaz et la détection.

D'un autre coté et en connexion étroite avec le domaine des macromolécules géantes, les dendrimères sont des molécules de haut poids moléculaires, fonctionnelles et hautement ramifiées. Les dendrimères se distinguent de leurs analogues linéaires par la grande précision de leur fabrication étant donné qu'ils sont construits étape par étape, par la répétition d'une séquence de réaction permettant la multiplication de chaque unité répétitive et des fonctions terminales. Cette construction conduit à des macromolécules mono-disperses, homogènes et dotées d'une topologie spécifique en terme de périodicité et d'une concentration de réactivité au niveau de leur surface. Le caractère modulable du coeur, des branches et des fonctions localisées en surface permet de diversifier aisément leur réactivité (Katir, N.; El Brahmi, N.; El Kadib, A.; Mignani, S.; Caminade, A.-M.; Bousmina, M.; Majoral, J. P. Synthesis of Onion-Peel Nanodendritic Structures with Sequential Functional Phosphorus Diversity. Chem. Eur. J., 2015, 21, 6400-6408*).* Le contrôle de leur arborescence avec un grand degré de précision accompagné de ce qui est communément désigné comme « *effet de génération*» sont certainement les éléments les plus avantageux dans la chimie des dendrimères. Ceci permet de fabriquer des objets chimiques sur mesure et d'en ajuster ensuite les performances. Le premier dendrimère a été décrit par Tomalia en 1986 (Tomalia, D. A.; Baker, H.; Dewald, J.; Hall, M.; Kallos, G.; Martin, S.; Roeck, J.; Ryder, J.; Smith, P. Dendritic macromolecules: synthesis of starburst dendrimers. Macromolecules, 1986, 19, 2466-2468*)*. La particularité des dendrimères comme macromolécules a conduit à leur implémentation dans une série d'application, notamment la fabrication d'outils pour le diagnostic et comme transporteur de médicament. Leur structure bio-inspirée, très similaire à un arbre géant, confère à ces dendrimères une réactivité remarquable notamment vis-à-vis des cellules biologiques, ce qui en fait des outils incontournables en nano-médecine. Dans cette catégorie, les dendrimères phosphorés sont encore les plus attractifs pour plusieurs raisons : la présence du phosphore dans le squelette des dendrimères offre la possibilité d'une caractérisation fine et précise de ces édifices, notamment par RMN du phosphore (Caminade, A.-M.; Laurent, R.; Turrin, C.-O.; Rebout, C.; Delavaux-Nicot, B.; Ouali, A.; Zablocka, M.; Majoral, J.-P. Phosphorus dendrimers as viewed by 31P NMR spectroscopy; synthesis and characterization. C. R. Chimie, 2010, 13, 1006-1027*).* Le caractère vivant des combinaisons phosphore-azote constitue un potentiel pour des applications biomédicales. L'hydrophobicité de leur coeur et la polarité des groupements externes confèrent à ces dendrimères un caractère amphiphile ; ces deux aspects seraient à la base de leur similitude avec les enzymes. En dernier, leur caractère inorganique et la présence d'hétéroatome leur assurent une grande stabilité.

Par distinction des polymères classiques (figure 1a), le concept de copolymères (également appelés polymères à bloc) développés jusqu'ici a montré que la cohabitation de plusieurs segments dans le même squelette polymérique confère au polymère final les propriétés initiales de chaque bloc (figure 1b). Si en plus, les blocs de départ sont complexes, leur combinaison dans le matériau final devrait conduire à une accumulation holistique des propriétés. Autrement dit : le polymère final héritera les propriétés des éléments de départ mais générera également des propriétés qui lui seront spécifiques. Par exemple, ces polymères peuvent avoir intuitivement la réactivité des entités de départ mais posséderaient en plus une porosité hiérarchique, une orientation préférentielle, une hydrophobicité et une stabilité accrue. Tous ces éléments sont d'un grand intérêt dans la technologie des polymères, leur formulation et la synthèse de nouveaux matériaux et nano-composites.

Par exemple, pour augmenter la complexité macromoléculaire d'un édifice, des dendrimères ont été greffés sur les chaînes latérales de polymères linéaires (figure 1c). Des dendrimères hyperbranchés ont été également synthétisés par réticulation. Cependant, ces travaux ne présentent qu'une extension aux macromolécules déjà connues. En effet, aucun travail n'a porté sur la synthèse de structures tridimensionnelles par polymérisation de deux ou plusieurs globules dendritiques contenant des hétéroatomes (figure 1d).

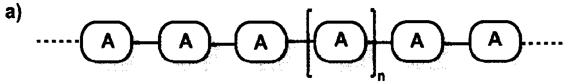

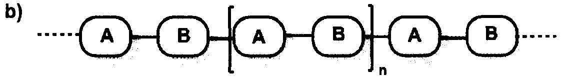

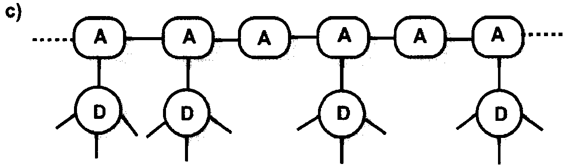

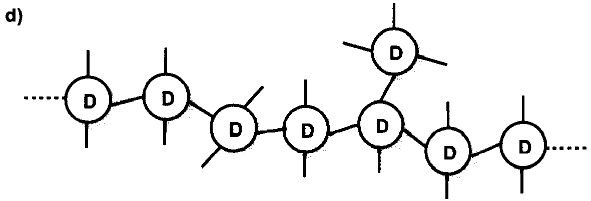

Figure 1. Illustration des différentes structures polymériques existantes (a-c) et de la structure faisant l'objet de la présente invention (d).

Les inventeurs ont mis au point une méthode de synthèse des macromolécules polystructurées et aussi une nouvelle classe de macromolécules géantes par polymérisation d'entités ayant une grande complexité moléculaires, en l'occurrence les dendrimères. Les polymères qui en résultent sont appelés *co-polydendrimères.*

### Description de l'invention :

Un premier aspect de l'invention consiste en la préparation de nouveaux copolymères dentritiques fusionnés par une nouvelle méthode de synthèse telle que décrit dans les revendications .

Selon un deuxième aspect de l'invention, il est rapporté la préparation de copolydendrimères par la polymérisation radicalaire ou par co-condensation polymérique de deux ou plusieurs différents dendrimères contenant des hétéroatomes.

Selon un troisième aspect de l'invention, il est rapporté la copolymérisation d'au moins deux deux différents dendrimères renfermant des hétéroatomes, et ceci en absence de métal comme catalyseur.

Un quatrième aspect de l'invention rapporte la co-condensation polymérique d'au moins deux différents dendrimères renfermant des hétéroatomes et possédant respectivement des groupements aldéhydes et des groupements amines.

Selon un cinquième aspect de l'invention, il est décrit la co-condensation polymérique d'au moins deux différents dendrimères renfermant des hétéroatomes et possédant respectivement des groupements acides carboxyliques et des groupements amines.

Selon un sixième aspect de l'invention, il est prévu co-condensation polymérique par voie radicalaire d'au moins deux différents dendrimères renfermant des hétéroatomes.

Selon un septième aspect de l'invention, il est prévu l'utilisation de différentes générations de dendrimères dans la co-condensation polymérique de plusieurs dendrimères à hétéroatomes. Selon un huitième aspect de l'invention, il est prévu l'utilisation de dendrimères avec des groupements phosphorés, azoté, et soufrés.

Selon un neuvième aspect de l'invention, il est prévu l'utilisation dans ces co-condensations polymériques, des dendrimères phosphorés, azoté et soufrés, renfermant une molécule de viologène.

### Brève description des figures :

Figure 1. Illustration des différentes structures polymériques existantes (a-c) et de la structure faisant l'objet de la présente invention (d).
   Tableau 1. Tableau décrivant les combinaisons ayant permet d'accéder aux copolydendrimères et spécifiant le nombre de phosphore que contient le polymère final.
Figure 2. Schéma représentatif des dendrimères à terminaison amine, à terminaison aldéhyde ou à terminaison acide caboxylique.
Figure 3. Description de la copolymérisation des entités précédemment mentionnées.
Figure .4 charte des unités utilisées pour la synthèse des copolydendrimères.

### Exemple non limitatif de préparation de copolydendrimères, :

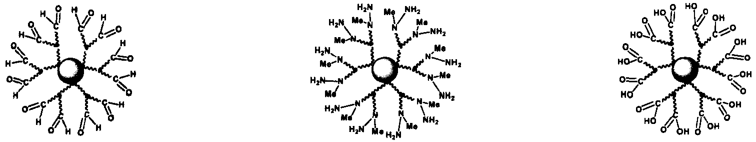

Figure 2. Illustration des dendrimères a terminaison amine (au milieu) et à terminaison acide carboxylique (à droite) et aldéhyde (à gauche).

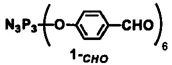

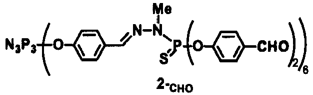

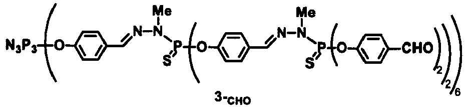

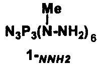

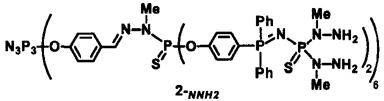

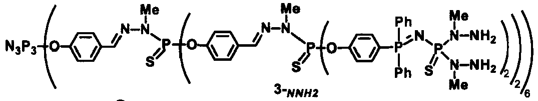

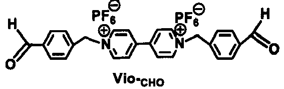

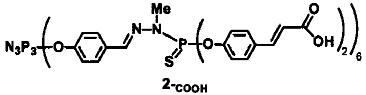

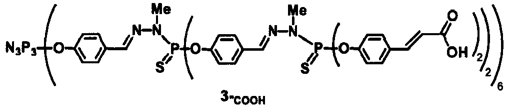

Figure 4. Charte des unités utilisées pour la synthèse des polydendrimères.

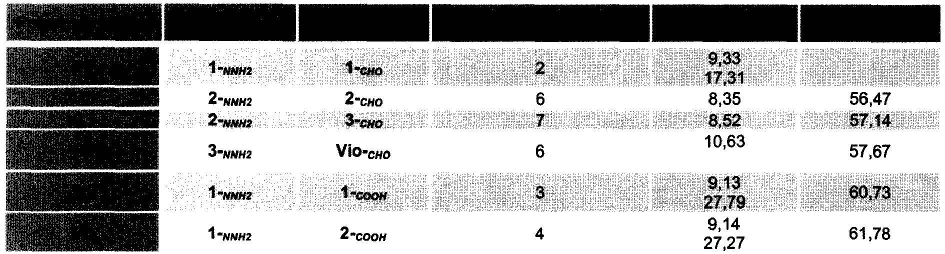

**P₁**: A une solution du dendrimère **1-*_{NNH2}*** (20 mg, 4,94 10⁻⁵ mol) dans 3 mL de THF est ajoutée une solution du dendrimère **1**-***_{CHO}*** (42,5 mg, 4,93 10⁻⁵ mol) dans 5 mL de THF. Le mélange est laissé sous agitation à température ambiante pendant 48 heures. Après filtration, le solide est lavé avec le THF puis l'éthanol et enfin avec l'acétone. Le polydendrimère **P₁** est obtenu sous forme d'une poudre blanche. RMN ¹³C (100 MHz) δ 31,18 (N-Me), 121,15 (C₆H₄), 127,70 (C₆H₄), 128,63 (C₆H₄), 133,50 (CH=N et (C₆H₄)), 150,05 (C₆H₄), 154,71 (C₆H₄); RMN ³¹P (162 MHz) δ 9,33 (N₃P₃-O), 17,31 (N₃P₃-N).

**P₂**: A une solution du dendrimère ***2-_{NNH2}*** (40 mg, 5,94 10⁻⁶ mol) dans 4 mL de THF est ajoutée une solution du dendrimère **2***-**_{CHO}*** (34 mg, 1,19 10⁻⁵ mol) dans 6 mL de THF. Le mélange réactionnel est laissé sous agitation à température ambiante pendant 48 heures. Après filtration, le solide est lavé avec le THF, l'éthanol puis l'acétone. Le polydendrimère **P₂** est obtenu sous forme d'une poudre blanche. RMN ¹³C (100 MHz) δ 32,35 (N-Me), 121,32 (C₆H₄), 128,05 (C₆H₄ et C₆H₅), 132,89 (CH=N, C₆H₅ et C₆H₄), 151,17(C₆H₄); RMN ³¹P (162 MHz) δ 8,35 (N₃P₃ et PPh₂), 56,47 (P=S).

P₃: A une solution du dendrimère ***2-_{NNH2}*** (40 mg, 5,94 10⁻⁶ mol) dans 4 mL de THF est ajoutée une solution du dendrimère **3-*_{CHO}*** (40,5 mg, 5,91 10⁻⁶ mol) dans 4 mL de THF. Le mélange réactionnel est laissé sous agitation à température ambiante pendant 48 heures. Après filtration, le précipité est lavé avec le THF, l'éthanol puis avec l'acétone. Le polydendrimère **P₃** est obtenu sous forme d'une poudre blanche. RMN ¹³C (100 MHz) δ 32,13 (N-Me), 121,42 (C₆H₄), 128,17 (C₆H₄, C₆H₅), 132,49 (CH=N, C₆H₅ et C₆H₄), 151,14 (C₆H₄); RMN ³¹P (162 MHz) δ 8,52 (N₃P₃, PPh₂), 57,14 (P=S).

**P₄**: A une solution du dendrimère **3-*_{NNH2}*** (40 mg, 2,74 10⁻⁶ mol) dans 5 mL d'acétone est ajoutée à une solution de **Vio*-_{CHO}*** (45 mg, 6,58 10⁻⁵ mol) dans 6 mL d'acétone. Le mélange est laissé sous agitation à température ambiante pendant 72 heures puis filtré et le précipité est lavé avec l'acétone. Le polydendrimère **P₄** est obtenu sous forme d'une poudre orange. RMN ¹³C (100 MHz, ) δ 32,06 (N-Me), 64,43 (N-CH₂), 122,38 (C₆H₄, NC₅H₄), 129,00 (C₆H₅, C₆H₄, NC₅H₄), 130.11 (C₆H₄, NC₅H₄), 132.07 (C₆H₄, NC₅H₄), 137.75 (CH=N, C₆H₅ and (C₆H₄), 145.48 (NC₅H₄), 151,39 (C₆H₄, NC₅H₄), 153,69 (C₆H₄, NC₅H₄); RMN ³¹P (162 MHz, ) δ -143,96 (hept, *J* = 702.6 Hz, PF₆), 10,70 (N₃P₃, PPh₂), 57,23 (P=S).

**P₅**: A un mélange de **1-*_{COOH}*** (20 mg, 5,95 10⁻⁶ mol), 1-éthyl-3-(3diméthylaminopropyl)carbodiimide (15 mg, 7,85 10⁻⁵ mol) et diméthylaminopyridine (9 mg, 7,4 10⁻⁵ mol) dans 10 mL de THF est ajoutée une solution du dendrimère **1-*_{NNH2}*** (4,8 mg, 1,19 10⁻⁵ mol). Le mélange est laissé sous agitation à température ambiante pendant 120 heures. Après filtration, le résidu est lavé avec le THF et le CH₂Cl₂. Le polydendrimère **P₅** est obtenu sous forme d'une poudre blanche. RMN ¹³C (100 MHz) δ 35,52 (N-CH₃), 39,73 (N-Me), 121.03 (C₆H₄), 122.04 (C₆H₄), 132.03 (C₆H₄), 138.75 (CH=N and (C₆H₄), 140.41 (C₆H₄), 151.24 (C₆H₄), 167.10 (C₆H₄); RMN ³¹P (162 MHz) δ 9,13 (N₃P₃-O), 27,79 (N₃P₃-N), 60,73 (P=S).

**P₆**: A un mélange du dendrimère **2-*****_{COOH}*** (60 mg, 7,63 10⁻⁶ mol), 1-éthyl-3-(3diméthylaminopropyl)carbodiimide (38 mg, 2,10 10⁻⁴ mol) et diméthylaminopyridine (22 mg, 1,83 10⁻⁵ mol) dans 20 mL de THF est ajoutée une solution du dendrimère **1-*_{NNH2}*** (12 mg, 2,96 10⁻⁵ mol). Le mélange réactionnel est laissé sous agitation pendant 120 heures à température ambiante. Après filtration, le résidu est lave avec le THF et le CH₂Cl₂. Le polydendrimère **P₆** est obtenu sous forme d'une poudre blanche. RMN ¹³C (100 MHz) δ 40,76 (N-Me), 122,39 (C₆H₄), 131,99 (C₆H₄), 139,99 (C₆H₄), 151,19 (C₆H₄), 168,22 (CON); Solid state ³¹P NMR (162 MHz) δ 9.14 (N₃P₃-O), 27,27 (N₃P₃-N), 61,78 (P=S).

## Revendications

1. Procédé de synthèse de co-polydendrimères renfermant des hétéroatomes à partir d'au moins deux dendrimères comme précurseurs de départ, caractérisé en en ce que le coeur d'au moins un dendrimère à hétéroatomes soit de type cyclotriphosphazene, cyclotetraphosphazene ou thiophosphine, et en ce qu'au moins un des dendrimères à hétéroatomes utilisées renferme une molécule photo-active de type viologène, spiropyrane, anthraquinone.

2. Procédé de synthèse selon la revendication 1, **caractérisée en ce que** les copolydendrimères tridimensionnels soient obtenus par fusion de deux ou plusieurs différents dendrimères.

3. Procédé de synthèse selon la revendication 2, **caractérisé en ce qu'**au moins un dendrimère à hétéroatomes utilisé lors de la co-condensation comporte des fonctions amines terminales en surface.

4. Procédé selon la revendication 2, **caractérisé en ce que** le second dendrimère à hétéroatomes utilisé pour qu'au moins un dendrimère utilisé lors de la co-condensation comporte des fonctions réactives en surface de type aldéhydes, acides carboxyliques, ester méthyliques, anhydrides, chlorure d'acides.

5. Procédé selon la revendication 2, **caractérisé en ce que** les dendrimères possédant des hétéroatomes et à terminaison amine, aldéhydes, et acides utilisés lors de la polycondensation soient de génération 0 à 10.

6. Procédé selon la revendication 2, **caractérisé en ce que** la co-condensation polymérique des différents dendrimères à hétéroatomes soit effectuée en absence de catalyseur, en présence d'un catalyseur métallique, d'un amorceur thermique, photochimique ou radicalaire.

7. Procédé selon les revendications 2, 3 et 5, **caractérisé en ce que** les copolydendrimères obtenus soient utilisés comme additifs dans les verres photochromes, électro-chromes et thermo-chromes, dans la peinture, dans les cellules photovoltaïques, dans les piles à combustibles et dans les nanotechnologies des nano-composites.

## Patentansprüche

1. Verfahren zur Synthese von Co-Polydendrimeren mit Heteroatomen ausgehend von mindestens zwei Dendrimeren als Ausgangsvorläufer, **dadurch gekennzeichnet, dass** der Kern von mindestens einem Dendrimer mit Heteroatomen vom Cyclotriphosphazen-, Cyclotetraphosphazen- oder Thiophosphin-Typ ist, und dass mindestens eines der Dendrimere mit Heteroatomen ein photoaktives Molekül vom Typ Viologen, Spiropyran oder Anthrachinon enthält.

2. Syntheseverfahren nach Anspruch 1, **dadurch gekennzeichnet, dass** die dreidimensionalen Co-Polydendrimere durch Verschmelzen von zwei oder mehreren verschiedenen Dendrimeren erhalten werden.

3. Syntheseverfahren nach Anspruch 2, **dadurch gekennzeichnet, dass** mindestens ein Dendrimer mit Heteroatomen, das bei der Co-Kondensation verwendet wird, endständige Aminfunktionen an der Oberfläche aufweist.

4. Verfahren nach Anspruch 2, **dadurch gekennzeichnet, dass** das zweite Dendrimer mit Heteroatomen verwendet wird, damit mindestens ein Dendrimer, das bei der Co-Kondensation verwendet wird, reaktive Oberflächenfunktionen vom Typ Aldehyd, Carbonsäure, Methylester, Anhydrid, Säurechlorid umfasst.

5. Verfahren nach Anspruch 2, **dadurch gekennzeichnet, dass** die bei der Polykondensation verwendeten Dendrimere mit Heteroatomen und endständigen Aminen, Aldehyden und Säuren von der Generation 0 bis 10 sind.

6. Verfahren nach Anspruch 2, **dadurch gekennzeichnet, dass** die polymere Co-Kondensation der verschiedenen Dendrimere mit Heteroatomen in Abwesenheit eines Katalysators, in Gegenwart eines Metallkatalysators, eines thermischen, photochemischen oder radikalischen Initiators durchgeführt wird.

7. Verfahren nach den Ansprüchen 2, 3 und 5, **dadurch gekennzeichnet, dass** die erhaltenen Co-Polydendrimere als Zusatzstoffe in photochromen, elektrochromen und thermochromen Glasarten, in Farben, in Photovoltaikzellen, in Brennstoffzellen und in der Nanotechnologie für Nanokomposite verwendet werden.

## Claims

1. A method for synthesising co-polydendrimers containing heteroatoms from at least two dendrimers as starting precursors, **characterised in that** the core of at least one dendrimer with heteroatoms is of the cyclotriphosphazene, cyclotetraphosphazene or thiophosphine type, and **in that** at least one of the dendrimers with heteroatoms used contains a photo-active molecule of the viologen, spiropyran or anthraquinone type.

2. The synthesis method according to claim 1, **characterised in that** the three-dimensional co-polydendrimers are obtained by fusing two or more different dendrimers.

3. The synthesis method according to claim 2, **characterised in that** at least one dendrimer with heteroatoms used during the co-condensation includes terminal amine functions on the surface.

4. The method according to claim 2, **characterised in that** the second dendrimer with heteroatoms used so that at least one dendrimer used during the co-condensation includes surface-reactive functions of the aldehyde, carboxylic acid, methyl ester, anhydride or acid chloride type.

5. The method according to claim 2, **characterised in that** the dendrimers possessing heteroatoms and with amine, aldehyde and acid terminations used during the polycondensation are of 0 to 10 generation.

6. The method according to claim 2, **characterised in that** the polymeric co-condensation of the different dendrimers with heteroatoms is carried out in the absence of catalyst, in the presence of a metal catalyst, or of a thermal, photochemical or radical initiator.

7. The method according to claims 2, 3 and 5, **characterised in that** the co-polydendrimers obtained are used as additives in photochromic, electrochromic and thermochromic glasses, in paint, in photovoltaic cells, in fuel cells and in nano-composite nanotechnologies.
